# EUROPEAN PATENT APPLICATION

(11) **EP 2 103 787 A1**
(43) Date of publication of application: **23.09.2009**
(21) Application number: 07720531.8
(22) Date of filing: 26.03.2007
(51) Int. Cl.: F01N 3/05, F01N 3/30

(54) **AN EMISSION-FREE EXHAUST GAS HANDLING DEVICE**

(30) Priority: 12.01.2007 CN 200710026268
(71) Applicant: Zhang, Yuguang, Gangzhou Guangdong 510610 (CN)
(72) Inventor: Zhang, Yuguang, Gangzhou Guangdong 510610 (CN)
(74) Representative: Vandeberg, Marie-Paule L.G.
(86) International application number: PCT/CN2007/000957
(87) International publication number: WO 2008/083530

(57) **Abstract**

An exhaust gas treatment device emitting no tail gas comprising a housing having an exhaust gas inlet (1) and a first energy-exchange unit (2) located within the housing and in fluid-communication with at least a second energy-exchange unit (2), each energy-exchange unit (2) comprising at least a laminar or a jet flow nozzle (21), an associated diffusion bore (22) and an energy-exchange chamber (23) coupled therebetween, wherein the energy-exchange chamber (23) of the first energy-exchange unit (2) is provided with an opening (24) leading to the atmosphere; a gas-mixing chamber (3) is provided between two adjacent energy-exchange units (2); and a recirculating tube (4) is connected between the gas-mixing chamber (3) of any of the second and subsequent energy-exchange unit (s) (2) and the gas inlet of the first energy-exchange unit (2).

## Description

### Field of the Invention

This invention relates to a device for controlling exhaust pollution, particularly to an exhaust gas treatment device emitting no tail gas.

### Background of the Invention

There are many conventional techniques for controlling exhaust pollution, for example, for reducing tail gas from motor vehicles and etc. Some techniques are based on combination of fuel and batteries to reduce emission and pollution, but techniques for disposal of used batteries are not in mature state and secondary pollution may be resulted. As an important means that China Government is promoting energetically for controlling exhaust gas of motor vehicles, another technique based on electrical ejection in conjunction with a three way system is known. The three way system is actually an external purifier for absorbing the exhaust gas, which comprises a cellular structure consisted of three metals, i.e. platinum, rhodium and palladium. When the temperature of the engine of motor vehicles during its operation in high speed reaches to 700~800°C, chemical reaction will occur on these three metals and they effectively absorb and purify the exhaust gas and therefore reduce contents of CO, HC and NOX in the exhaust gas according to relevant national standards on emission. Since the three way system is an external purifier, its normal operation is greatly influenced by the proper control of air-fuel ratio and fuel atomization in the engine. In case any failure occurs in the electrical ejection device, e.g. oxygen sensor, control switch and/or air making-up valve is damaged, the three way system will soon become failed and cannot perform its intended function. In addition, its cellular structure is easy to be clogged and saturated, and as a result, the purifying function is lost. This will result in need of frequent replacement of the three way system (generally, its operational life is limited to 90 days) and the cost will be increased. The three way system can only reduce exhaust pollution to a specific level, but cannot eliminate the exhaust gas completely.

### Object of the Invention

An object of this invention is to provide an exhaust gas treatment device which can emit no tail gas.

### Summary of the Invention

The object of the invention is achieved by an exhaust gas treatment device emitting no tail gas, the device comprises a housing having an exhaust gas inlet and at least two stages of energy-exchanging unit(s) arranged in a row within the housing , each energy-exchanging unit comprising at least a jet flow nozzle , an associated diffusion bore and a energy-exchanging chamber coupled therebetween ,wherein , the energy-exchanging chamber of the first stage of energy-exchanging unit (s) is provided with an opening leading to the atmosphere ; a gas -mixing chamber is provided between two adjacent stages of energy-exchanging unit(s) ; and a recirculating tube (4) is connected between the gas-mixing chamber (3) of the second through the last stages of energy-exchanging unit(s)(2) and the gas inlet of the first stage of energy-exchanging unit(s)(2) respectively .

In an aspect of the invention , a pressure-communicating tube is connected between two adjacent energy-exchanging chambers of the third through last stages of energy-exchanging unit(s) or between the energy-exchanging chamber and the gas-mixing chamber of third through last stages of energy-exchanging unit(s) respectively .

In a further aspect of the invention, a pipe leading to the atmosphere is provided in the gas-mixing chamber of the last stage of energy-exchanging unit(s).

In a further aspect of the invention, the jet flow nozzle of each energy-exchanging unit can be replaced by a laminar flow nozzle.

With this arrangement, the exhaust gas at high pressure entering the first stage of energy-exchanging unit (s) via the inlet jets inwards and makes the first energy-exchanging chamber become vacuum and air being sucked into the chamber from atmosphere via the opening. The combustible gas in this air-gas mixture at high pressure is combusted furiously in the next energy-exchanging chamber and the combustible and harmful substance is decomposed. The remaining exhaust gas is transferred to next stage. On entering next stage, the exhaust gas swirls at high speed because of negative pressure in the energy-exchanging chamber connected to the pressure-communicating tube. The negative energy produced by the negative pressure and working energy of the exhaust gas are balanced out each other and a very strong vortex is resulted. This results in heavy collisions and momentum exchange, i.e. "black hole" of gas. The higher the negative pressure is, the more exhaust gas is consumed. The remaining not-consumed gas will flow back via recirculating tube to inlet of the device and this process is repeated until all the exhaust gas is consumed and no emission will occur.

### Brief Description of Drawings

Fig. 1 shows schematically the structure of a device according to first embodiment of this invention.
Fig. 2 shows schematically the structure of a device according to second embodiment of this invention.
Fig.3 shows schematically the structure of a jet flow nozzle according to this invention.
Fig.4 shows schematically the structure of a laminar flow nozzle according to this invention.
Fig. 5 is a sectional view along line A-A in Fig. 1.
Fig. 6 is a sectional view along line B-B in Fig. 1.

### Detailed Description of Some Embodiments

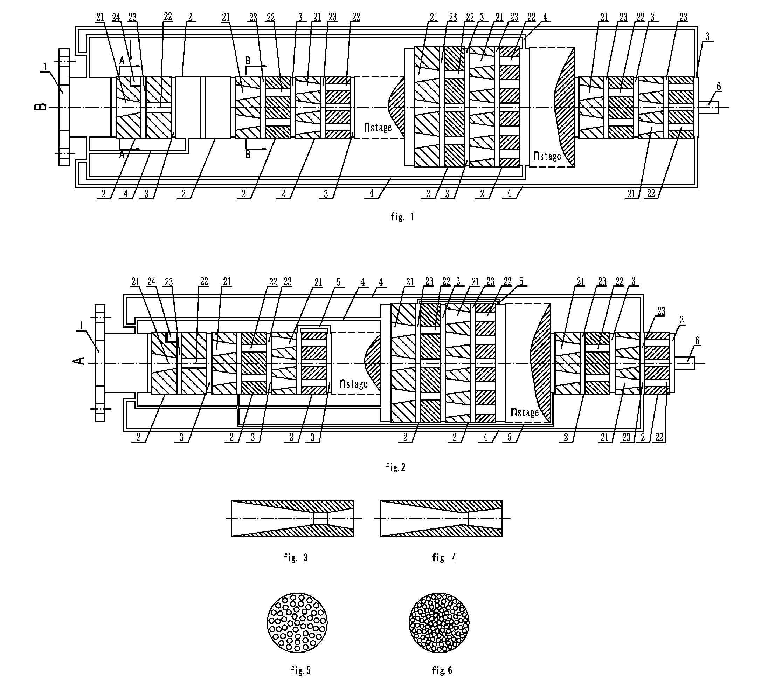

As shown in Fig. 1, 3, 4, 5 and 6, an exhaust gas treatment device emitting no tail gas comprises a housing having an exhaust gas inlet (1) and at least 13 stages of energy-exchanging unit(s)(2) arranged in a row within the housing , wherein , the first stage of energy-exchanging unit (s) (2) comprises 50 jet flow nozzles (21), 50 associated diffusion bores (22) and a energy-exchanging chamber(23) coupled therebetween ; an opening (24) leading to the atmosphere is provided in the energy-exchanging chamber(23) of the first stage ; the second and third stages comprise 50 jet flow nozzles (21) and 50 associated diffusion bores (22) respectively ; the fourth stage comprises 100 jet flow nozzles (21) and 100 associated diffusion bores (22) ; the fifth , sixth , seventh , eighth and ninth stages comprise 200 jet flow nozzles (21) and 200 associated diffusion bores (22) respectively ; the fourth stage comprises 100 jet flow nozzles (21) and 100 associated diffusion bores (22); the tenth , eleventh , twelfth and thirteenth stages comprise 100 jet flow nozzles (21) and 100 associated diffusion bores (22) respectively ; a gas -mixing chamber (3) is provided between two adjacent stages of energy-exchanging unit (s) (2) respectively ; a recirculating tube (4) is connected between the gas-mixing chamber (3) of second , eighth and thirteenth stages and the gas inlet of the first stage respectively ; a pressure-communicating tube (5) is connected between the two adjacent energy-exchanging chamber(23) of third through last stages or between the energy-exchanging chamber(23) and the gas-mixing chamber (3) of third through last stages respectively ; a pipe (6) leading to the atmosphere is provided in the gas-mixing chamber of the last stage and the jet flow nozzle(21) of each energy-exchanging unit(2) can be replaced by a laminar flow nozzle . As shown in Fig.2 , a recirculating tube (4) is connected between the gas-mixing chamber (3) of sixth , eleventh and thirteenth stages and the gas inlet of the first stage respectively ; and a pressure-communicating tube (5) is connected between the energy-exchanging chamber(23) and the gas-mixing chamber (3) of third through eighth stages , between the gas-mixing chamber (3) of the tenth stage and the energy-exchanging chamber (23) of ninth stage and between the gas-mixing chamber (3) of the eleventh stage and the energy-exchanging chamber(23) of second stage respectively.

Covered by the protective scope of the appended claims , the first stage of energy-exchanging unit(s) can comprise a number of energy-exchanging units in parallel in various way and the energy-exchanging units in parallel can be in fluid communication with the gas-mixing chamber in the nth stage and a gas-mixing chamber can be in fluid communication with another number of energy-exchanging units in parallel in the next stage .Various combinations of these variants are also possible ,and all these combinations can consume exhaust gas and achieve above object .

Prototype of this invention has been produced and no tail gas was detected in testing of this prototype.

## Claims

1. An exhaust gas treatment device emitting no tail gas comprising a housing having an exhaust gas inlet (1) and a first energy-exchange unit (2) located within the housing and in fluid-communication with at least a second energy-exchange unit (2), each energy-exchange unit (2) comprising a jet flow nozzle (21), an associated diffusion bore (22) and an energy-exchange chamber (23) coupled therebetween, wherein the energy-exchange chamber (23) of the first energy-exchange unit (2) is provided with an opening (24) leading to the atmosphere; a gas-mixing chamber (3) is provided between two adjacent energy-exchange units (2); and a recirculating tube (4) is connected between the gas-mixing chamber (3) of any of the second and subsequent energy-exchange unit(s) (2) and the gas inlet of the first energy-exchange unit (2).

2. An exhaust gas treatment device according to claim 1, wherein a pressure-communicating tube (5) is connected between the at least third and last energy-exchange chambers (23) or between the energy-exchange chamber (23) and the gas-mixing chamber (3).

3. An exhaust gas treatment device according to claim 1 or 2, wherein a pipe (6) leading to the atmosphere is provided in the gas-mixing chamber of the last energy-exchange unit (2).

4. An exhaust gas treatment device according to any of claims 1 to 3, wherein some or each of the energy-exchange units (2) comprise a laminar flow nozzle instead of a jet flow nozzle (21).
